# EUROPEAN PATENT APPLICATION

(11) **EP 4 246 736 A1**
(43) Date of publication of application: **20.09.2023**
(21) Application number: 22891568.2
(22) Date of filing: 23.08.2022
(51) Int. Cl.: H01R 13/514, B60L 53/31, H01R 13/42

(54) **CHARGING PILE**

(30) Priority: 09.11.2021 CN 202111321461
(71) Applicant: Gongniu Group Co., Ltd., Ningbo, Zhejiang 315300 (CN)
(72) Inventor: CHENG, Han, Ningbo, Zhejiang 315300 (CN); GUI, Lin, Ningbo, Zhejiang 315300 (CN); LIU, Jinwen, Ningbo, Zhejiang 315300 (CN); CHEN, Wu, Ningbo, Zhejiang 315300 (CN)
(74) Representative: Dilg, Haeusler, Schindelmann Patentanwaltsgesellschaft mbH
(86) International application number: PCT/CN2022/114150
(87) International publication number: WO 2023/082761

(57) **Abstract**

The present disclosure discloses a charging pile, relating to the technical field of vehicle charging. The charging pile comprises a charging pile main body, a mounting back plate, and a wiring assembly. The wiring assembly is arranged on the mounting back plate, wherein the charging pile main body cooperates with the wiring assembly to enable the power connection of the charging pile main body. Compared with the prior art, the charging pile provided in the present disclosure enables split mounting and wiring, improves mounting efficiency, reduces labor costs, and facilitates maintenance and repair, due to the use of a charging pile main body, a mounting back plate, and a wiring assembly mounted on the mounting back plate, which are provided separately.

## Description

### Cross-reference to Related Application

The present disclosure claims the priority to the Chinese patent application with the filling No. 2021113214615 filed with the Chinese Patent Office on November 09, 2021, and entitled "Charging Pile", the contents of which are incorporated herein by reference in entirety.

### Technical Field

The present disclosure relates to the technical field of vehicle charging, in particular to a charging pile.

### Background Art

The small charging piles currently on the market are not easy to maintain and keep in good repair, and the charging piles are heavy and difficult to move flexibly. As a result, a single person cannot complete the mounting and wiring of the charging piles, resulting in low mounting efficiency and high labor costs.

### Summary

The objective of the present disclosure is to provide a charging pile, which can realize separate mounting and wiring, improve mounting efficiency, reduce labor costs, and facilitate maintenance and repair.

The present disclosure is achieved by adopting the following technical solutions.

A charging pile comprises a charging pile main body, a mounting back plate, and a wiring assembly, wherein the wiring assembly is arranged on the mounting back plate, and the charging pile main body cooperates with the wiring assembly to enable the power connection of the charging pile main body.

Optionally, the wiring assembly comprises an electric connecting portion, and the charging pile main body is provided with a plug connector. The plug connector and the electric connecting portion are mated by insertion and electrically connected to each other. The electric connecting portion is configured to communicate with the external power supply through the input line.

Optionally, the electric connecting portion comprises a wire-connecting terminal and a plug bush, wherein the wire-connecting terminal is electrically connected to the plug bush, and the plug connector is inserted into the plug bush and cooperates with the plug bush. The wire-connecting terminal is configured to be electrically connected to the input line.

Optionally, both the plug connectors and the electric connecting portions are multiple in number. A plurality of plug connectors is arranged at intervals on the charging pile main body, wherein each plug connector is electrically connected to one electric connecting portion.

Optionally, each of the plug connectors is linear, and a plurality of the plug connectors is evenly arranged at intervals on the charging pile main body.

Optionally, the wiring assembly further comprises a cover plate, wherein the cover plate is detachably connected to the mounting back plate, which jointly forms an accommodating cavity configured to accommodate the electric connecting portion. The cover plate is provided with a socket communicating with the accommodating cavity. The plug connector is capable of being inserted into the socket and electrically connected with the electric connecting portion.

Optionally, the wire-connecting terminal comprises a terminal post provided with a terminal slot and a connecting piece connected to the terminal post, wherein the input line extends into the terminal slot, and the plug bush extends into the terminal slot. The connecting piece is configured to hold the input line and the plug bush.

Optionally, the cover plate is provided with a through hole corresponding to the connecting piece, wherein the through hole communicates with the accommodating cavity. The connecting piece is provided in the through hole.

Optionally, the mounting back plate is provided with a waterproof plate, wherein the waterproof plate is obliquely arranged above the cover plate.

Optionally, the mounting back plate comprises a base plate and a side plate, wherein the side plate surrounds the base plate. The electric connecting portion is mounted on the base plate, and the cover plate is detachably connected to the base plate and/or the side plate. The waterproof plate is provided on the base plate and located between the electric connecting portion and the side plate.

Optionally, a plurality of the plug bushes is provided with partitions therebetween.

Optionally, the wiring assembly comprises a limiting piece, wherein the mounting back plate is detachably connected to the limiting piece. The mounting back plate and the limiting piece form a limiting cavity configured for the input line to pass through.

Optionally, the charging pile main body is provided with an accommodating slot. A wall of the accommodating slot comprises a perimeter wall and a bottom wall, wherein the perimeter wall surrounds outside the bottom wall. The mounting back plate is able to extend into the accommodating slot when the plug connector is cooperating with the electric connecting portion.

Optionally, the extension direction of the plug connector is perpendicular to the bottom wall, wherein the plug connector is able to be mated to the electric connecting portion in the direction perpendicular to the bottom wall.

Optionally, a bottom of the perimeter wall is provided with an avoidance opening, wherein the avoidance opening communicates with the accommodating slot. The avoidance opening is configured to yield to the mounting back plate. The extension direction of the plug connector is parallel to the bottom wall, wherein the plug connector is able to be mated to the electric connecting portion in the direction parallel to the bottom wall.

Optionally, the perimeter wall is provided with a through-hole, and a side surface of the mounting back plate is provided with a mounting slot. A nut is embedded in the mounting slot, wherein the nut is configured to cooperate with a fixing screw passing through the through-hole.

Optionally, a sealing strip is provided on a side of the perimeter wall near the mounting back plate, wherein the sealing strip is configured to seal the gap between the perimeter wall and the mounting back plate.

Optionally, the mounting back plate is provided with a mounting hole, wherein the mounting hole is configured for the mounting piece to pass through, so as to facilitate fixed mounting of the mounting back plate to the fixed carrier.

The charging pile provided in the present disclosure has beneficial effects as follows.

A charging pile provided in the present disclosure comprises a charging pile main body, a mounting back plate, and a wiring assembly, wherein the wiring assembly is arranged on the mounting back plate, and the charging pile main body cooperates with the wiring assembly to enable the power connection of the charging pile main body. Compared with the prior art, the charging pile provided in the present disclosure enables split mounting and wiring, improves mounting efficiency, reduces labor costs, and facilitates maintenance and repair, due to the use of a charging pile main body, a mounting back plate, and a wiring assembly mounted on the mounting back plate, which are designed separately.

### Brief Description of Drawings

In order to more clearly illustrate the technical solutions of the embodiments of the present disclosure, the following will briefly introduce the accompanying drawings used in the embodiments. It should be understood that the following drawings only show some embodiments of the present disclosure, and therefore they should not be regarded as a limitation on the scope. Those ordinarily skilled in the art can also obtain other related drawings based on these drawings without inventive effort.
FIG. 1 shows a structural schematic view of a charging pile provided in embodiments of the present disclosure;
FIG. 2 shows a schematic view of an application scenario of a charging pile mounted on a fixed carrier provided in embodiments of the present disclosure;
FIG. 3 shows an exploded view of a charging pile provided in embodiments of the present disclosure;
FIG. 4 shows a schematic view of one structure of the charging pile main body in the charging pile provided in embodiments of the present disclosure;
FIG. 5 shows a structural schematic view of a mounting back plate in the charging pile provided in embodiments of the present disclosure;
FIG. 6 shows an exploded view of a wiring assembly in the charging pile provided by an embodiment of the present disclosure;
FIG. 7 shows a schematic view of the structure of the connection of the electric connecting portion to the input line in the charging pile provided in embodiments of the present disclosure; and
FIG. 8 shows a schematic view of another structure of the charging pile main body in the charging pile provided in embodiments of the present disclosure.

Reference numerals: 100-charging pile; 110-charging pile main body; 111 - EV charger; 112-cable; 113-plug connector; 114-accommodating slot; 115-perimeter wall; 116-bottom wall; 117-through-hole; 118-avoidance opening; 120-mounting back plate; 1201-base plate; 1203-side plate; 121-mounting slot; 122-mounting hole; 123-waterproof plate; 124-nut; 125-mounting piece; 127-sealing strip; 130-wiring assembly; 131-electric connecting portion; 133-cover plate; 1331-through hole; 134-limiting piece; 135-socket; 136-wire-connecting terminal; 1361-terminal slot; 1363-terminal post; 1365-connecting piece; 137-plug bush; 1371-plug-in piece; 138-partition; 140-accommodating cavity; 150-limiting cavity; 200-input line; 300-fixed carrier.

### Detailed Description of Embodiments

In order to make clearer the purposes, technical options and advantages of the embodiments of the present disclosure, a clear and complete description of the technical solutions in embodiments of the present disclosure will be given below in conjunction with the drawings in embodiments of the present disclosure. The described embodiments are clearly part of and not all of the embodiments of the present disclosure. The components of the disclosed embodiments generally described and illustrated in the drawings herein can be arranged and designed in a variety of different configurations.

Accordingly, the following detailed description of the embodiments of the present disclosure provided in the accompanying drawings is not intended to limit the scope of the claimed disclosure but merely represents selected embodiments of the present disclosure. Based on the embodiments of the present disclosure, all other embodiments obtained by those ordinarily skilled in the art without creative effort shall fall within the protection scope of the present disclosure.

It should be noted that similar numerals and letters denote similar terms in the following drawings so that once an item is defined in one drawing, it does not need to be further defined and explained in subsequent drawings.

In the description of the present disclosure, it should be noted that the terms "inside", "outside", "up", "down", "horizontal", etc. indicate an orientation or positional relationship based on the orientation or positional relationship shown in the accompanying drawings, or the usually placed orientation or positional relationship of the disclosed product when used, which are intended only to facilitate and simplify the description of the present disclosure, not to indicate or imply that the device or element referred to must be in a particular orientation, or be constructed and operate in a particular orientation, and therefore are not to be construed as limiting the present disclosure. In addition, the terms "first", "second" and "third" are only used to distinguish the descriptive and are not to be construed as indicating or implying relative importance.

In the description of the present disclosure, it should also be noted that unless otherwise clearly stipulated and limited, the terms "provide", "communicate", "mount" and "connect" should be understood in a broad sense, for example, it can be a fixed connection, a detachable connection, or an integral connection, it can be a mechanical connection or an electrical connection, and it can be a direct connection, an indirect connection through an intermediary, or an internal communication between two components. Those of ordinary skill in the art can understand the specific meanings of the above terms in the present disclosure according to specific situations.

Some embodiments of the present disclosure are described in detail below, in conjunction with the accompanying drawings. The features in the following embodiments can be combined with each other without conflict.

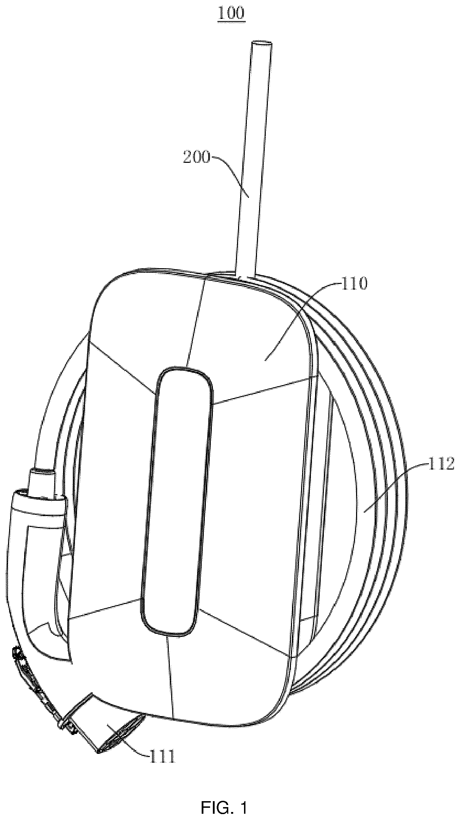

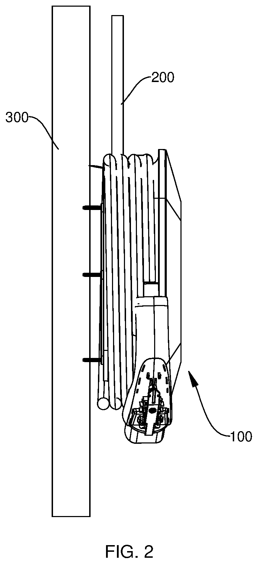

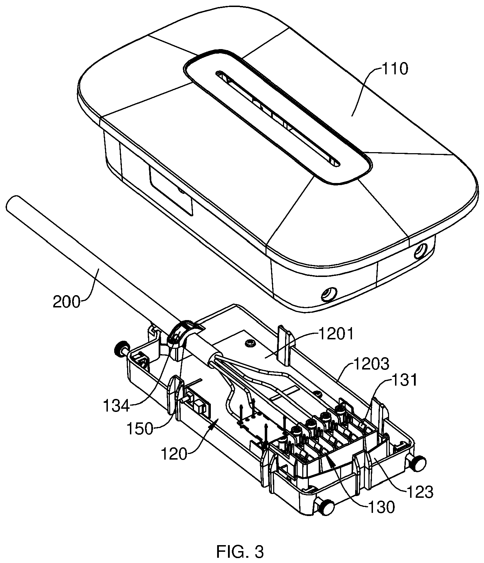

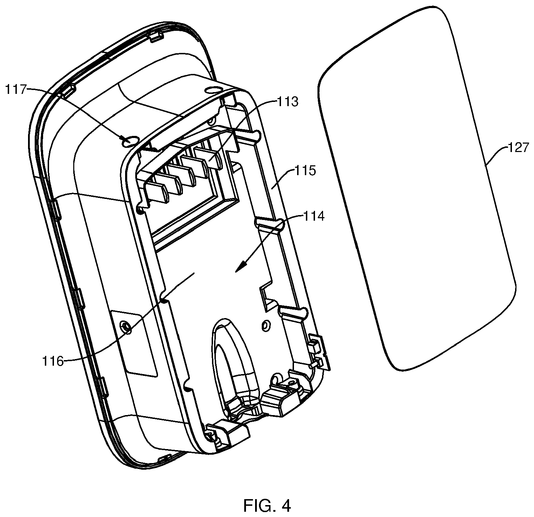

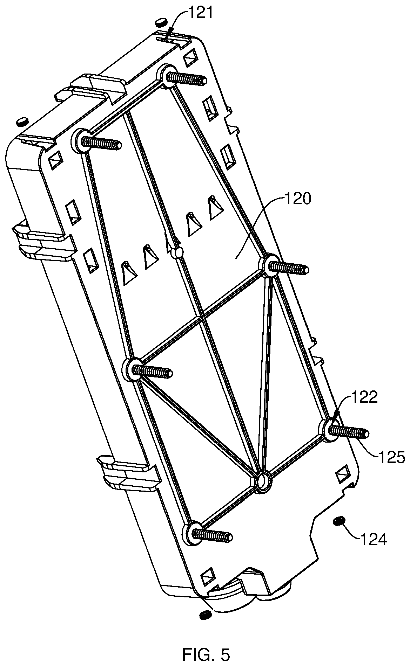

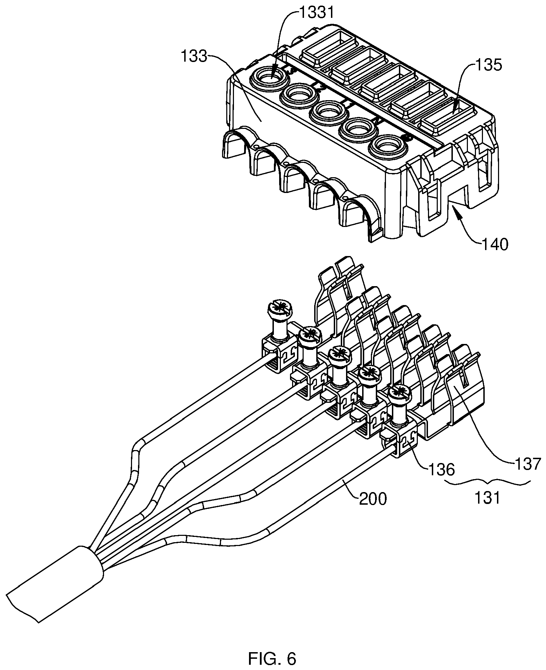

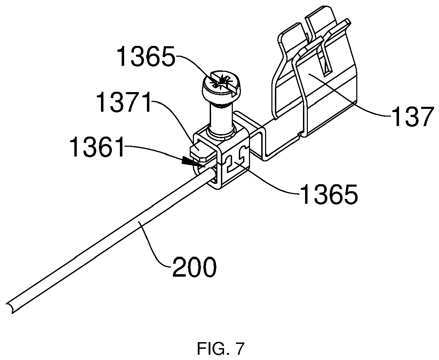

Referring to FIGS. 1-7, the embodiments of the present disclosure provide a charging pile 100, configured for charging a new energy vehicle. The charging pile 100 is able to realize separate mounting and wiring, improve mounting efficiency, reduce labor costs, and facilitate maintenance and repair.

It should be noted that the charging pile 100, as a supporting facility for new energy vehicles, is generally set up in the parking lot. The charging pile 100 is mounted fixedly on a fixed carrier 300 in the parking lot, wherein the fixed carrier 300 includes, but is not limited to, a wall or a column, etc. The fixed carrier 300 is able to support and fix the charging pile 100 so that the user can use the charging pile 100 to charge the new energy vehicle.

The charging pile 100 comprises a charging pile main body 110, a mounting back plate 120, and a wiring assembly 130, wherein the wiring assembly 130 is mounted on the mounting back plate 120, and the mounting back plate 120 is configured to be fixedly mounted to the fixed carrier 300 to hold the wiring assembly 130 in place. The charging pile main body 110 is mated and electrically connected to the wiring assembly 130 to enable the charging pile main body 110 to be connected to power. Optionally, the charging pile main body 110 is provided with a cable 112 having an EV charger 111. After the charging pile main body 110 is powered, the user is able to insert the EV charger 111 into the new energy vehicle to realize the charging operation of the new energy vehicle.

The wiring assembly 130 comprises an electric connecting portion 131, a cover plate 133, and a limiting piece 134, wherein the electric connecting portion 131 is mounted on the mounting back plate 120 and is communicated with an external power source via the input line 200 to provide power to the electric connecting portion 131. The charging pile main body 110 is provided with a plug connector 113, wherein the plug connector 113 is mated by insertion and electrically connected to the electric connecting portion 131, so as to initially fix the relative position of the charging pile main body 110 and the wiring assembly 130, and to allow the charging pile main body 110 to be powered.

Optionally, the number of the plug connectors 113 and the electric connecting portions 131 can be one or more, respectively. For example, both the plug connectors 113 and the electric connecting portions 131 are multiple in number. A plurality of plug connectors 113 is evenly arranged at intervals in a linear manner on the charging pile main body 110, wherein each plug connector 113 is electrically connected to one electric connecting portion 131, to enable the charging pile main body 110 to be powered. Certainly, the plug connector 113 is able to be linear, cylindrical, triangular, or any other shape, which is not limited here. In the embodiment, the number of plug connectors 113 and the number of the electric connecting portions 131 are both five, wherein five plug connectors 113 are arranged in parallel on the charging pile main body 110, and each plug connector 113 is plugged into and cooperated with one electric connecting portion 131. However, it is not limited to this, in other embodiments, the number of plug connectors 113 and the number of electric connecting portions 131 can be both four, or can be both six. The number of plug connectors 113 and the electric connecting portions 131 is not specifically limited.

Optionally, one of the plug connector 113 and the electric connecting portion 131 applies a male plug and the other applies a female plug, which can achieve both mechanically cooperating connection and electrical connection. In the embodiment, the plug connector 113 is a male plug, such as an electric plug. The electric connecting portion 131 applies a female plug, such as plug bush 137. Optionally, a plurality of the plug bushes 137 are provided with partitions 138 therebetween. In the embodiment, the partition 138 is provided between every two adjacent plug bushes 137. The partition 138 is provided on the base plate 1201 and the partition 138 extends in a direction perpendicular to the base plate 1201. The partition 138 keeps the electrical insulation between two adjacent plug bushes 137, thereby preventing short circuits.

It is noted that the cover plate 133 and the mounting back plate 120 are detachably connected, which jointly form an accommodating cavity 140 configured to accommodate the electric connecting portion 131. The electric connecting portion 131 is provided in the accommodating cavity 140. The cover plate 133 and the mounting back plate 120 act together, such that the position of the electric connecting portion 131 is limited, which prevents the electric connecting portion 131 from detaching from the accommodating cavity 140. Optionally, the cover plate 133 is provided with a socket 135 communicating with the accommodating cavity 140. The plug connector 113 is able to extend into the socket 135, enter the accommodating cavity 140, and be electrically connected to the electric connecting portion 131, so as to enable the charging pile main body 110 to be powered.

In the embodiment, the cover plate 133 is fixed to the mounting back plate 120 by means of snap-fit, but it is not limited to this. In other embodiments, the cover plate 133 and the mounting back plate 120 can also be fixed by screw connection, bolt connection, riveting, gluing, or welding. There is no specific limitation on the manner in which the cover plate 133 is detachably connected to the mounting back plate 120.

Optionally, the mounting back plate 120 comprises a base plate 1201 and a side plate 1203, wherein the side plate 1203 surrounds the base plate 1201. The electric connecting portion 131 is mounted on the base plate 1201, and the cover plate 133 is detachably connected to the base plate 1201 and/or the side plate 1203. In the embodiment, the cover plate 133 is snapped to the side plate 1203.

In the embodiment, the mounting back plate 120 is provided with a waterproof plate 123, wherein the waterproof plate 123 is obliquely arranged above the cover plate 133. That is to say, the waterproof plate 123, provided on the cover plate 133 and the mounting back plate 120, is configured to stop and deflect water to prevent water from flowing into the accommodating cavity 140, so as to reduce the risk that water or other foreign objects enter the accommodating cavity 140 and then cause a short circuit or damage to the electric connecting portion 131. Optionally, the waterproof plate 123 is provided on the base plate 1201 and is located between the electric connecting portion 131 and the side plate 1203 to protect the electrical connecting portion 131 from water, dust, insect, etc.

It is noted that the limiting piece 134 is detachably connected to the mounting back plate 120, and together they form a limiting cavity 150, through which the input line 200 is arranged. The limiting piece 134 is configured to limit the input line 200. The limiting piece 134 is capable of fixing the input line 200 to the mounting back plate 120, so as to prevent the input line 200 from detaching from the limiting cavity 150 and to ensure a stable and reliable electrical connection of the electric connecting portion 131.

The electric connecting portion 131 comprises a wire-connecting terminal 136 and a plug bush 137, wherein the wire-connecting terminal 136 is electrically connected to the plug bush 137, and the plug connector 113 is inserted into and cooperates with the plug bush 137, to achieve electrical conduction of the plug connector 113 with the plug bush 137. The wire-connecting terminal 136 is configured to be electrically connected to input line 200 to energize the charging pile main body 110. Optionally, the plug bush 137 extends into the wire-connecting terminal 136, wherein the wire-connecting terminal 136 is fixed to the plug bush 137 by means of a screw connection. The input line 200 extends into the wire-connecting terminal 136 and is arranged close to the wire-connecting terminal 136. The input line 200 supplies power to the plug bush 137 through the wire-connecting terminal 136 to power the plug connector 113. Therefore, the charging pile main body 110 is powered.

Optionally, the wire-connecting terminal 136 comprises a terminal post 1363 provided with a terminal slot 1361 and a connecting piece 1365 connected to the terminal post 1363, wherein the input line 200 extends into the terminal slot 1361, and the plug bush 137 extends into the terminal slot 1361. The connecting piece 1365 is configured to hold the input line 200 and the plug bush 137. It can be understood that under the pressing effect of the connecting piece 1365, the input line 200 and the plug bush 137 are tightly attached together, wherein at least one of the input line 200 and the plug bush 137 is in close contact with the inner wall of the terminal slot 1361 to achieve a stable and reliable electrical connection between the input line 200 and the plug bush 137. Optionally, the connecting piece 1365 adopts screws.

Optionally, the plug bush 137 is provided with a plug-in piece 1371, wherein the plug-in piece is inserted into the terminal slot 1361, and the connecting piece 1365 abuts against the plug-in piece 1371. The input line 200 is located between the plug-in piece 1371 and the inner wall of terminal slot 1361. Tightening the connecting piece can compress the input line 200 and the plug-in piece 1371, so as to realize a stable and reliable electrical connection between the input line 200 and the plug-in piece 1371.

The cover plate 133 is provided with a through hole 1331 corresponding to the connecting piece 1365, wherein the through hole 1331 communicates with the accommodating cavity 140. The connecting piece 1365 is provided in the through hole 1331. Each through hole 1331 contains one connecting piece 1365, and the cover plate 133 protects and isolates the connecting piece 1365.

In the embodiment, the plug connector 113 is an electric plug. The plug connector 113 passes through the socket 135, extends into the plug bush 137, and mates with the plug bush 137 by insertion. The electrical connection is simple and reliable, which can ensure the stability of the passing current.

It is noted that the charging pile main body 110 is provided with an accommodating slot 114. A wall of the accommodating slot 114 comprises a perimeter wall 115 and a bottom wall 116, wherein the perimeter wall 115 surrounds outside the bottom wall 116. In the state where the plug connector 113 is mated with the electric connecting portion 131, the mounting back plate 120 is able to be placed in the accommodating slot 114, such that the perimeter wall 115 is wrapped around the mounting back plate 120, wherein the perimeter wall 115 can protect and shield the mounting back plate 120 from foreign objects such as water or insects.

In the embodiment, the plug connector 113 is arranged on the bottom wall 116. The extension direction of the plug connector 113 is perpendicular to the bottom wall 116, wherein the plug connector 113 is able to be mated to the electric connecting portion 131 in the direction perpendicular to the bottom wall 116. Optionally, during the mounting process of the charging pile main body 110, the charging pile main body 110 approaches the mounting back plate 120 in a direction perpendicular to the mounting back plate 120, so that the plug connector 113 is inserted into the electric connecting portion 131. During this process, the mounting back plate 120 gradually extends into the accommodating slot 114; and when the mating of the plug connector 113 and the electric connecting portion 131 is completed, the mounting back plate 120 is completely arranged in the accommodating slot 114 and is attached to the bottom wall 116.

It is noted that the perimeter wall 115 is provided with a through-hole 117, and a side surface of the mounting back plate 120 is provided with a mounting slot 121, wherein the position of the through-hole 117 corresponds to the position of the mounting slot 121. A nut 124 is embedded in the mounting slot 121, wherein the nut 124 is configured to cooperate with a fixing screw passing through the through-hole 117. Optionally, by embedding the nut 124 in the mounting slot 121, it is not necessary to provide a threaded hole in the side surface of the mounting back plate 120, which protects the electric connecting portion 131 by effectively preventing water from flowing into the mounting back plate 120 through the through-hole 117 and the threaded hole. After the mating of the plug connector 113 and the electric connecting portion 131 is completed, the fixing screw is penetrated through the through-hole 117, extends into the mounting slot 121, and is tightened with the nut 124, so as to fix the relative position of the charging pile main body 110 and the mounting back plate 120 and further fix the relative position of the charging pile main body 110 and the wiring assembly 130, which improves the fastening effect and prevents the charging pile main body 110 from detaching.

In the embodiment, the charging pile main body 110 is fixed to the mounting back plate 120 by means of a screw connection, but it is not limited to this. In other embodiments, the charging pile main body 110 and the mounting back plate 120 can also be fixed by snapping connection, gluing, riveting, or welding. There is no specific limitation on the manner in which the charging pile main body 110 is detachably connected to the mounting back plate 120.

In the embodiment, the number of through-holes 117, mounting slots 121, nuts 124, and fixing screws is four, with two through-holes 117 arranged at intervals at the top of the perimeter wall 115 and the other two through-holes 117 arranged at intervals at the bottom of the perimeter wall 115, wherein each fixing screw passes through one through-hole 117 and mates with one nut 124, so as to improve positioning effect. However, it is not limited to this. In other embodiments, the number of through-holes 117, mounting slots 121, nuts 124, and fixing screws can be from two to ten. For example, they can all be three, four, five, six, seven, eight, or nine, etc. There is no specific limit to the number of through-holes 117, mounting slots 121, nuts 124, and fixing screws.

In the embodiment, a sealing strip 127 is provided on the side of the perimeter wall 115 near the mounting back plate 120, wherein the sealing strip 127 is configured to seal the gap between the perimeter wall 115 and the mounting back plate 120 for improving the effect of waterproofing and insect prevention, so as to prevent water or insects from entering the charging pile main body 110 through the gap between the perimeter wall 115 and the mounting back plate 120, thus, the reliability and service life of the electric connecting portion 131 is improved.

It is noted that the mounting back plate 120 is provided with mounting hole 122, wherein the mounting hole 122 is configured for the mounting piece 125 to pass through, so as to facilitate fixed mounting of the mounting back plate 120 to the fixed carrier 300. Optionally, the mounting piece 125 is a mounting screw. During the mounting process of the mounting back plate 120, the mounting piece 125 is penetrated through the mounting hole 122 and is tightened against the mounting carrier 300, so as to fix the relative position of the mounting back plate 120 and the fixed carrier 300. Therefore, the mounting back plate 120 is prevented from shifting or tilting relative to the fixed carrier 300.

In the embodiment, the number of mounting holes 122 and mounting pieces 125 is six, wherein the six mounting holes 122 are provided in a rectangular array on the mounting back plate 120, with each mounting piece 125 passing through one mounting hole 122 and cooperating with the fixed carrier 300, thus, the fixing effect is improved. However, it is not limited to this. In other embodiments, the number of mounting hole 122 and mounting piece 125 can be from two to ten. For example, they can all be three, four, five, six, seven, eight, or nine, etc., respectively. There is no specific limit to the number of mounting holes 122 and mounting pieces 125.

During the mounting process of the charging pile 100, firstly, the mounting back plate 120 is attached to the fixed carrier 300, and the mounting back plate 120 is fixed to the fixed carrier 300 by means of the mounting piece 125 passing through the mounting hole 122 and tightening with respect to the fixed carrier 300. Subsequently, the input line 200 is extended into the mounting back plate 120 and connected to the electric connecting portion 131 mounted on the mounting back plate 120, and the input line 200 is fixed in position by the limiting piece 134. Next, the plug connector 113 of the charging pile main body 110 is inserted into the electric connecting portion 131 so that the mounting back plate 120 is arranged in the accommodating slot 114. Finally, the fixing screw penetrates through the through-hole 117 and is tightened with the nut 124 to fix the relative position of the charging pile main body 110 and the mounting back plate 120, so as to complete the mounting and wiring.

The charging pile 100 provided in the embodiments of the present disclosure comprises a charging pile main body 110, a mounting back plate 120, and a wiring assembly 130, wherein the wiring assembly 130 is arranged on the mounting back plate 120, and the charging pile main body 110 cooperates with the wiring assembly 130 to enable the power connection of the charging pile main body 110. Compared with the prior art, the charging pile 100 of the present disclosure is divided into a wiring section (the wiring section comprises a mounting back plate 120 and a wiring assembly 130) and a main body section (i.e., a charging pile main body 110) by separately providing the charging pile main body 110, the mounting back plate 120, and the wiring assembly 130 mounted on the mounting back plate 120. The wiring section is lighter and easier to move when wiring and the entire wiring section can be directly replaced even if the wiring section is accidentally dropped to the ground. In addition, if the intelligent hardware inside the charging pile main body 110 is updated or needs to be repaired subsequently, the whole charging pile main body 110 can be replaced or repaired individually without removing the wiring section from the wall, which is more flexible. In this way, it is able to realize separate mounting and wiring, and improve mounting efficiency. A single person can also quickly complete the installation and wiring operation of the charging pile 100, thereby reducing labor costs and facilitating maintenance and repair.

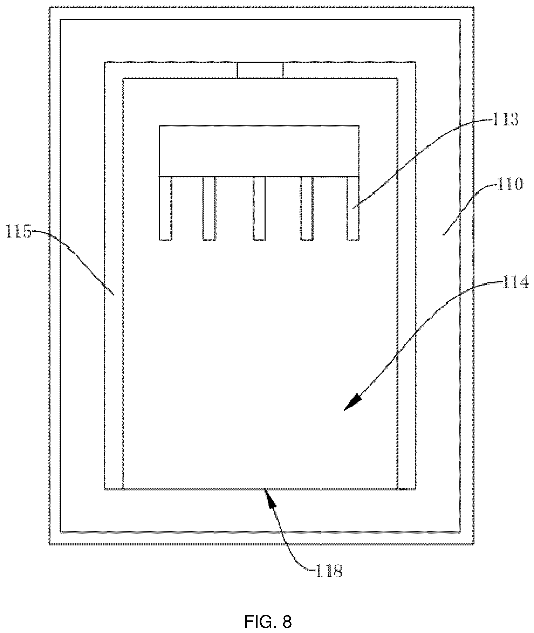

Optionally, referring to FIG. 8, the embodiment of the present disclosure provides a charging pile 100, wherein the extension direction of the plug connector 113 of the charging pile 100 can also be provided in a direction parallel to the bottom wall 116.

In the embodiment, a bottom of the perimeter wall 115 is provided with an avoidance opening 118, wherein the avoidance opening 118 communicates with the accommodating slot 114. The avoidance opening 118 is configured to yield to the mounting back plate 120, thereby the mounting back plate 120 is able to extend into the accommodating slot 114 through the avoidance opening 118. The extension direction of the plug connector 113 is parallel to the bottom wall 116, wherein the plug connector 113 is able to be mated to the electric connecting portion 131 in the direction parallel to the bottom wall 116. Optionally, during the mounting process of the charging pile main body 110, the charging pile main body 110 approaches the mounting back plate 120 along a direction parallel to the mounting back plate 120, so that the plug connector 113 is inserted into the electric connecting portion 131. During this process, the mounting back plate 120 passes through the avoidance opening 118 and gradually extends into the accommodating slot 114; and when the mating of the plug connector 113 and the electric connecting portion 131 is completed, the mounting back plate 120 is completely arranged in the accommodating slot 114.

Optionally, the plug connector 113 extends in a vertically downward direction, and the plug connector 113 can be mated with the electric connecting portion 131 in a vertically downward direction. During the mounting process of the charging pile main body 110, the charging pile main body 110 is pressed against the mounting back plate 120 and moves in a vertically downward direction to allow the plug connector 113 to be inserted into the electric connecting portion 131.

In the embodiment, the plug connector 113 is arranged on the bottom wall 116 and parallel to the bottom wall 116, but it is not limited to this. In other embodiments, the plug connector 113 is arranged on the perimeter wall 115 and parallel to the bottom wall 116. The position of the plug connector 113 is not specifically limited.

The above is only an optional embodiment of the present disclosure, which is not intended to limit the present disclosure, and the present disclosure may have various changes and variations for those skilled in the art. Any modification, equivalent substitution, improvement, etc. made within the spirit and principles of the present disclosure shall be included in the scope of protection of the present disclosure.

### Industrial Practicality

The charging pile 100 provided in the embodiment of the present disclosure is able to realize separate installation and wiring, improve installation efficiency, reduce labor costs, and facilitate maintenance and repair.

## Claims

1. A charging pile, **characterized in that** the charging pile comprises a charging pile main body (110), a mounting back plate (120), and a wiring assembly (130), wherein the wiring assembly (130) is mounted on the mounting back plate (120), and the charging pile main body (110) cooperates with the wiring assembly (130) to enable a power connection of the charging pile main body (110).

2. The charging pile according to claim 1, wherein the wiring assembly (130) comprises an electric connecting portion (131), and the charging pile main body (110) is provided with a plug connector (113), wherein the plug connector (113) and the electric connecting portion (131) are mated by insertion and electrically connected to each other; and the electric connecting portion (131) is configured to communicate with an external power supply through an input line (200).

3. The charging pile according to claim 2, wherein the electric connecting portion (131) comprises a wire-connecting terminal (136) and a plug bush (137), wherein the wire-connecting terminal (136) is electrically connected to the plug bush (137), and the plug connector (113) is inserted into the plug bush (137) and cooperates with the plug bush (137); and the wire-connecting terminal (136) is configured to be electrically connected to the input line (200).

4. The charging pile according to claim 3, wherein a plurality of plug connectors (113) and a plurality of electric connecting portions (131) are provided, wherein the plurality of plug connectors (113) are arranged at intervals on the charging pile main body (110), wherein each plug connector (113) is electrically connected to one electric connecting portion (131).

5. The charging pile according to claim 4, wherein each of the plug connectors (113) is linear, and the plurality of plug connectors (113) is evenly arranged at intervals on the charging pile main body (110).

6. The charging pile according to any one of claims 3 to 5, wherein the wiring assembly (130) further comprises a cover plate (133), wherein the cover plate (133) is detachably connected to the mounting back plate (120), which jointly forms an accommodating cavity (140) configured to accommodate the electric connecting portion (131); the cover plate (133) is provided with a socket (135) communicating with the accommodating cavity (140); and the plug connector (113) is capable of extending into the socket (135) and electrically connected to the electric connecting portion (131).

7. The charging pile according to claim 6, wherein the wire-connecting terminal (136) comprises a terminal post (1363) provided with a terminal slot (1361) and a connecting piece (1365) connected to the terminal post (1363), wherein the input line (200) extends into the terminal slot (1361), and the plug bush (137) extends into the terminal slot (1361); and the connecting piece (1365) is configured to hold the input line (200) and the plug bush (137).

8. The charging pile according to claim 7, wherein the cover plate (133) is provided thereon with a through hole (1331) corresponding to the connecting piece (1365), and the through hole (1331) communicates with the accommodating cavity (140); and the connecting piece (1365) is provided in the through hole (1331).

9. The charging pile according to any one of claims 6 to 8, wherein the mounting back plate (120) is provided with a waterproof plate (123), and the waterproof plate (123) is obliquely arranged above the cover plate (133).

10. The charging pile according to claim 9, wherein the mounting back plate (120) comprises a base plate (1201) and a side plate (1203), wherein the side plate (1203) surrounds the base plate (1201); the electric connecting portion (131) is mounted on the base plate (1201), and the cover plate (133) is detachably connected to the base plate (1201) and/or the side plate (1203); and the waterproof plate (123) is provided on the base plate (1201) and located between the electric connecting portion (131) and the side plate (1203).

11. The charging pile according to any one of claims 3 to 10, wherein a plurality of plug bushes (137) is provided with a partition (138) therebetween.

12. The charging pile according to any one of claims 2 to 11, wherein the wiring assembly (130) comprises a limiting piece (134), and the mounting back plate (120) is detachably connected to the limiting piece (134); and the mounting back plate (120) and the limiting piece (134) form a limiting cavity (150) configured for the input line (200) to pass through.

13. The charging pile according to any one of claims 2 to 12, wherein the charging pile main body (110) is provided with an accommodating slot (114), wherein a wall of the accommodating slot (114) comprises a perimeter wall (115) and a bottom wall (116), wherein the perimeter wall (115) surrounds outside the bottom wall (116); and the mounting back plate (120) is able to extend into the accommodating slot (114) when the plug connector (113) is cooperating with the electric connecting portion (131).

14. The charging pile according to claim 13, wherein an extension direction of the plug connector (113) is perpendicular to the bottom wall (116), wherein the plug connector (113) is able to be mated to the electric connecting portion (131) in a direction perpendicular to the bottom wall (116).

15. The charging pile according to claims 13 or 14, wherein a bottom of the perimeter wall (115) is provided with an avoidance opening (118), and the avoidance opening (118) communicates with the accommodating slot (114); the avoidance opening (118) is configured to yield to the mounting back plate (120); and an extension direction of the plug connector (113) is parallel to the bottom wall (116), wherein the plug connector (113) is able to be mated to the electric connecting portion (131) in a direction parallel to the bottom wall (116).

16. The charging pile according to any one of claims 13 to 15, wherein the perimeter wall (115) is provided with a through-hole (117), and a side surface of the mounting back plate (120) is provided with a mounting slot (121); and a nut (124) is embedded in the mounting slot (121), wherein the nut (124) is configured to cooperate with a fixing screw passing through the through-hole (117).

17. The charging pile according to any one of claims 13 to 16, wherein a sealing strip (127) is provided on a side of the perimeter wall (115) near the mounting back plate (120), and the sealing strip (127) is configured to seal a gap between the perimeter wall (115) and the mounting back plate (120).

18. The charging pile according to any one of claims 1 to 17, wherein the mounting back plate (120) is provided with a mounting hole (122), and the mounting hole (122) is configured for a mounting piece (125) to pass through, so as to facilitate fixed mounting of the mounting back plate (120) to a fixed carrier (300).
